# EUROPÄISCHE PATENTSCHRIFT

(11) **EP 2 789 381 B1**
(45) Veröffentlichungstag und Bekanntmachung des Hinweises auf die Patenterteilung: **20.01.2016**
(21) Anmeldenummer: 14001290.7
(22) Anmeldetag: 09.04.2014
(51) Int. Cl.: B01F 3/12, B01F 3/04, B01F 3/08, B01F 5/04, B01F 13/10, B03D 1/14, B03D 1/24, D21B 1/32

(54) **Belüftungsvorrichtung und Verfahren mit Stoffansaugung im Injektor**
Ventilating device and method with material intake in the injector
Dispositif d'aération et procédé avec aspiration de matériau dans l'injecteur

(30) Priorität: 11.04.2013 AT 2852013
(43) Veröffentlichungstag der Anmeldung: 15.10.2014
(73) Patentinhaber: Andritz AG, 8045 Graz (AT)
(72) Erfinder: Hertl, Erwin, A-8111 Judendorf-Strassengel (AT); Gorton-Hülgerth, Andreas, A-8010 Graz (AT)
(74) Vertreter: Tschinder, Thomas

(56) Entgegenhaltungen:
- EP-A2- 1 124 001
- WO-A1-2006/081611
- WO-A2-01/66259
- GB-A- 2 308 312

## Beschreibung

Den Gegenstand dieser Erfindung bildet ein Verfahren zur Belüftung von Dispersionen, insbesondere zur Flotation, beispielsweise von Faserstoffsuspensionen, bei dem mindestens eine Zelle vorgesehen ist und bei dem die Dispersion mit zumindest einem selbstansaugenden Injektor belüftet wird.

Die Flotation ist ein mechanisches Verfahren zur Abtrennung von Störstoffen und Druckfarbenpartikeln (Deinking-Flotation) aus, insbesondere in der Altpapieraufbereitung hergestellten, Faserstoffsuspensionen. Dabei werden in einer geeigneten Flotationszelle hydrophobe Feststoffe wie Druckfarbenpartikel, Stickies oder Asche mit Gasblasen in Kontakt gebracht. Die anhaftenden Feststoffe werden mit den Gasblasen an die Flüssigkeitsoberfläche getragen und können dort als Schaum entfernt werden. Der Faserstoff wird aufgrund seines hydrophilen Charakters mit dem Gutstoff ausgetragen. Zur Erzeugung der Gasblasen hat sich u.a. der Einsatz von selbstansaugenden Injektoren bewährt. Unter selbstansaugenden Injektoren werden Injektoren verstanden, bei denen die Flüssigkeitsströmung innerhalb des Injektors einen Unterdruck erzeugt, wodurch die Luft für die Belüftung angesaugt wird. Derartige selbstansaugende Injektoren sind hinlänglich bekannt. Da der Prozess der selektiven Entfernung von Druckfarben aus Faserstoffsuspensionen nur mit geringem Wirkungsgrad vor sich geht, werden meist mehrstufige Verfahren eingesetzt. Die EP 1124001 A beschreibt ein Flotationsverfahren, bei dem mindestens zwei Zellen vorgesehen sind und bei dem in jeder Zelle ein eigener, getrennter Flüssigkeitskreislauf vorgesehen ist, der das Gas bzw. die Luft über einen selbstansaugenden Injektor ansaugt und vermischt. Der Gutstoff der einzelnen Zellen gelangt über Öffnungen in den Zellentrennwänden in die jeweilige nächste Flotationszelle. Es handelt sich hierbei also um ein System mit einer Teilstrombelüftung und 100% freier Vorwärtsströmung.

Die WO01/66259A2, die ein Verfahren gemäß dem Oberbegriff des Anspruchs 1 offenbart, die GB2308312A und die WO2006/081611A1 offenbaren jeweils Belüftungssysteme, bei denen ein Teil der Dispersion aus der Flotationszelle über den Injektor angesaugt wird.

Es sind auch Systeme bekannt, bei denen ein Teilstrom der Suspension belüftet wird, bevor er der nächsten Flotationszelle zugeführt wird, und bei dem der restliche Teilstrom in freier Vorwärtsströmung in die nächste Zelle gelangt.

Außerdem sind Systeme bekannt, bei denen 100% der Suspension von der vorigen zur nächsten Zelle gepumpt und belüftet werden.

Diese Flotationsverfahren haben meist den Nachteil, dass nur eine bestimmte Luftmenge für die Belüftung genutzt werden kann, da es ansonsten zu starken Turbulenzen und zu einem hohen Energieverbrauch kommen würde. Außerdem ergibt eine ungenügende Durchmischung der hochbelüfteten und der unbelüfteten Suspension ein unbefriedigendes Flotationsergebnis.

Der Erfindung liegt daher die Aufgabe zugrunde, ein Flotationsverfahren bereitzustellen, das im Vergleich zu herkömmlichen Flotationsverfahren einen geringeren Energiebedarf aufweist und trotzdem ein gleichwertiges Flotationsergebnis liefert.

Gelöst wird diese Aufgabe durch ein Belüftungsverfahren bei dem ein erster Teilstrom der Dispersion mit Hilfe einer Pumpe dem Injektor zugeführt und belüftet wird, und ein zweiter Teilstrom der Dispersion ohne zu pumpen durch den Injektor angesaugt wird.
Der unbelüftete zweite Teilstrom wird dabei im Injektor durch den belüfteten ersten Teilstrom angesaugt. Durch die Vermischung der beiden Teilströme im Injektor selbst (Zwangsmischer) ist die Vermischung der Luft/Stoffsuspension besser, als bei der Vermischung der belüfteten und der unbelüfteten Stoffströme in der Flotationszelle.

Vorzugsweise wird der erste Teilstrom mit Hilfe der Pumpe einer Zelle entnommen und dem Injektor einer nachfolgenden Zelle zugeführt. Erfindungsgemäß wird der zweite Teilstrom durch den Injektor aus einer vorhergehenden Zelle angesaugt. Dabei kann der gesamte Stoffstrom über den Injektor der nachfolgenden Zelle zugeführt werden. Zwischen den Zellen ist dann keine freie Vorwärtsführung mehr vorgesehen.

Es ist günstig, wenn 30-90 % des Stoffstromes durch die Pumpe dem Injektor zugeführt werden und dass 70-10% des Stoffstromes ohne zu pumpen vom Injektor angesaugt werden. Die %-Angaben beziehen sich jeweils auf die Volumenströme. Die Menge des gepumpten Stoffstromes ist abhängig von der Ansaugcharakteristik des Injektors und dem Schaumverhalten des Stoffes.

Im Folgenden wird die Erfindung anhand von Zeichnungen beschrieben.

Es zeigen
Fig. 1 ein Ausführungsbeispiel der offenbarten Belüftungsvorrichtung;
Fig.2 ein weiteres Ausführungsbeispiel der offenbarten Belüftungsvorrichtung;
Fig. 3 ein Ausführungsbeispiel des selbstansaugenden Injektors;

Gleiche Bezugszeichen in den jeweiligen Figuren bezeichnen jeweils gleiche Bauteile bzw. Stoffströme.

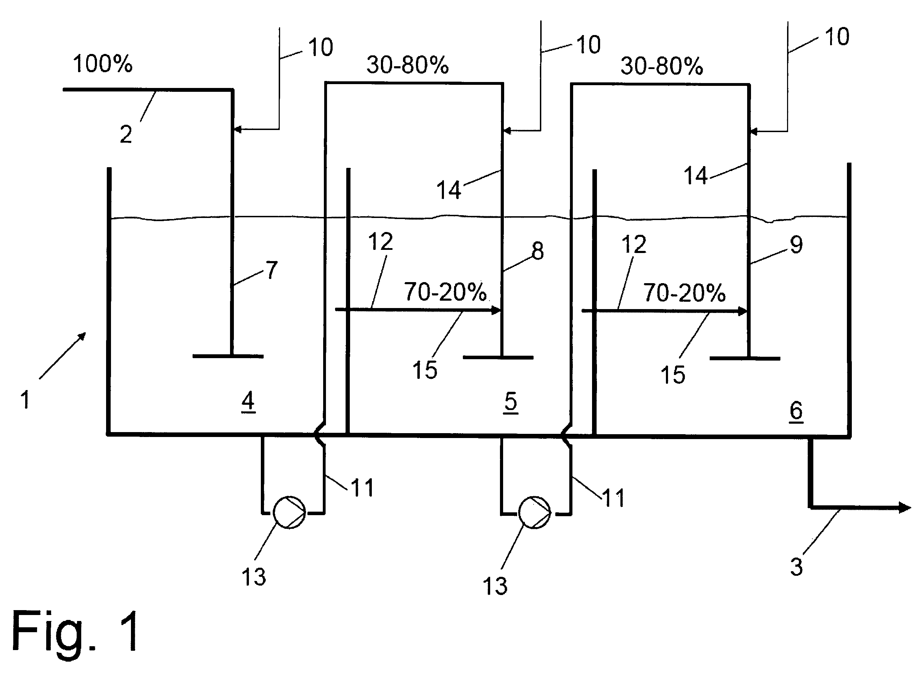

In Figur 1 ist ein Ausführungsbeispiel der offenbarten Belüftungsvorrichtung beschrieben. Die Flotationsvorrichtung 1 besteht im Wesentlichen aus mehreren Flotationszellen 4, 5 und 6. Die Faserstoffsuspension wird über den Zulauf 2 und den Injektor 7 der ersten Flotationszelle 4 zugeführt. Beim Injektor 7 handelt es sich um einen selbstansaugenden Injektor, bei dem die durch den Injektor 7 strömende Faserstoffsuspension einen Unterdruck erzeugt, sodass über die Luftzufuhr 10 Luft angesaugt wird. In der ersten Flotationszelle 4 werden in bekannter Weise die hydrophoben Störstoffe durch die Luft an die Flüssigkeitsoberfläche transportiert. Der sich dadurch bildende Schaum kann mit Hilfe einer Schaumrinne abtransportiert werden.

Ein erster Teilstrom 14 der Faserstoffsuspension wird über die erste Leitung 11 und die Pumpe 13 dem selbstansaugenden Injektor 8 der nachfolgenden Flotationszelle 5 zugeführt. Ein zweiter Teilstrom 15 wird über die zweite Leitung 12 durch den Injektor 8 angesaugt. Für den Transport des zweiten Teilstroms 15 von der ersten Flotationszelle 4 in die zweite Flotationszelle 5 ist keine Pumpe notwendig, da der belüftete erste Teilstrom 14 im Injektor 8 einen Unterdruck erzeugt, durch den der zweite Teilstrom 15 angesaugt wird.

Der Transport der Faserstoffsuspension von der zweiten Flotationszelle 5 zum Injektor 9 der dritten Flotationszelle 6 erfolgt ebenfalls über die beiden Teilströme 14 und 15. Auch in der zweiten und in der dritten Flotationszelle 5 und 6 werden die Störstoffe als Schaum von der Flüssigkeitsoberfläche entfernt. Die gereinigte Faserstoffsuspension verlässt schlussendlich die dritte Flotationszelle 6 als Gutstoff 3.

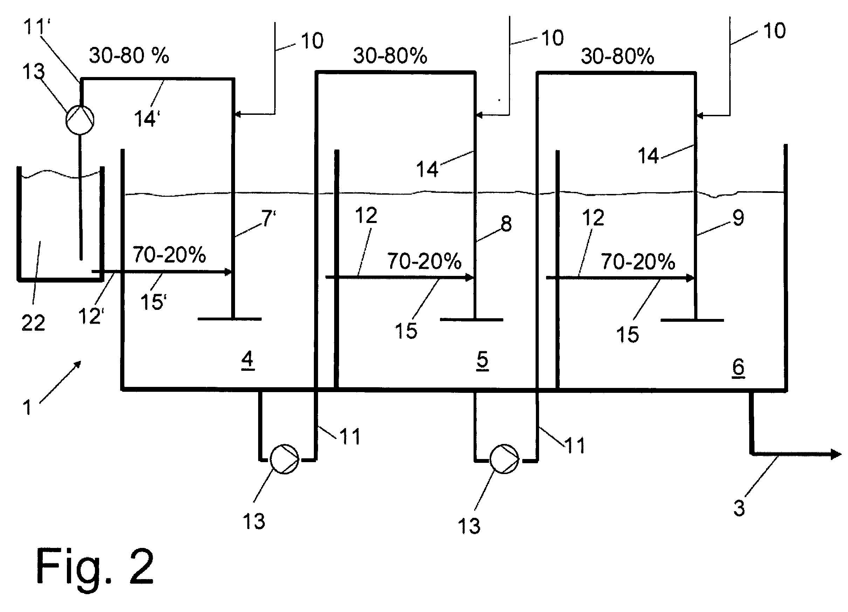

In Figur 2 ist ein ähnliches Ausführungsbeispiel der offenbarten Belüftungsvorrichtung wie in Fig. 1 beschrieben. Die Faserstoffsuspension wird dabei einem Vorlagebehälter 22 entnommen und mit Hilfe der Pumpe 13 über die Leitung 11' als erster Teilstrom 14' dem Injektor 7' der ersten Flotationszelle 4 zugeführt. Ein zweiter Teilstrom 15' wird über die Leitung 12' durch den Injektor 7' aus dem Vorlagebehälter 22 abgesaugt.

Der Flüssigkeitstransport von der ersten Flotationszelle 4 in die zweite bzw. dritte Flotationszelle 5, 6 erfolgt analog wie in Fig. 1.

In den vorliegenden Beispielen werden 30-80% der Faserstoffsuspension über die Pumpe 13 dem Injektor 7', 8, 9 zugeführt und 70-20% der Faserstoffsuspension ohne zu pumpen durch den Injektor 7', 8, 9 angesaugt.

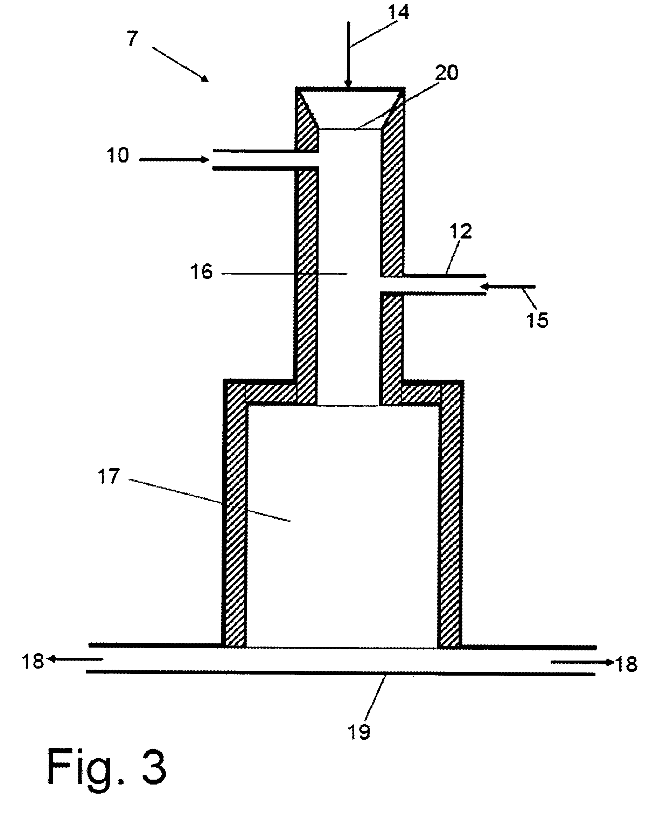

In Fig. 3 ist ein Ausführungsbeispiel des selbstansaugenden Injektors 7 dargestellt. Die Injektoren 7', 8, 9 in den Fig. 1 und 2 weisen einen analogen Aufbau auf. Der erste Teilstrom 14 wird dem Injektor 7 über die Düse 20 zugeführt und dadurch Luft durch die Luftzufuhr 10 angesaugt. In der Belüftungszone 16 wird über die Leitung 12 der zweite noch unbelüftete Teilstrom 15 angesaugt. In der nachfolgenden Mischzone 17 wird die Faserstoffsuspension intensiv mit der Luft vermischt.

Durch die Prallplatte 19 wird die belüftete Faserstoffsuspension umgelenkt und verlässt den Injektor 7 über den Austritt 18. Der Injektor 7 kann dabei einen kreisrunden Querschnitt aufweisen, wobei der Austritt 18 dann als Ringspalt ausgebildet ist.

## Patentansprüche

1. Verfahren zur Belüftung von Dispersionen, insbesondere zur Flotation, beispielsweise beim Deinken von Faserstoffsuspensionen, bei dem mindestens eine Zelle (4, 5, 6) und zumindest ein selbstansaugender Injektor (7, 7', 8, 9) vorgesehen sind, wobei ein erster Teilstrom (14, 14') der Dispersion mit Hilfe einer Pumpe (13) dem Injektor (7, 7', 8, 9) zugeführt und belüftet wird, und wobei ein zweiter Teilstrom (15, 15') der Dispersion ohne zu pumpen durch den Injektor (7, 7', 8, 9) angesaugt wird, **dadurch gekennzeichnet, dass** der zweite Teilstrom (15) durch den Injektor (8, 9) aus einer vorhergehenden Zelle (4, 5) angesaugt wird.

2. Verfahren nach Anspruch 1, **dadurch gekennzeichnet, dass** der erste Teilstrom (14) mit Hilfe der Pumpe (13) einer Zelle (4, 5) entnommen und dem Injektor (8, 9) einer nachfolgenden Zelle (5, 6) zugeführt wird.

3. Verfahren nach einem der Ansprüche 1 bis 2, **dadurch gekennzeichnet, dass** 30-90 % des Stoffstromes zwischen zwei Zellen (4, 5, 6) durch die Pumpe (13) dem Injektor (8, 9) zugeführt werden und dass 70-10% des Stoffstromes ohne zu pumpen vom Injektor (8, 9) angesaugt werden.

## Claims

1. Method for aerating dispersions, particularly for flotation, for example when deinking fibrous pulp suspensions, where at least one cell (4, 5, 6) and at least one self-priming injector (7, 7', 8, 9) are provided, where a first partial flow (14, 14') of the dispersion is fed to the injector (7, 7', 8, 9) with the aid of a pump (13) and aerated, and where a second partial flow (15, 15') of the dispersion is drawn through the injector (7, 7', 8, 9) by suction without pumping, **characterised in that** the second partial flow (15) is drawn by suction through the injector from a preceding cell (4, 5).

2. Method according to Claim 1, **characterised in that** the first partial flow (14) is taken from one cell (4, 5) with the aid of a pump (13) and fed to the injector (8, 9) of a subsequent cell (5, 6).

3. Method according to one of Claims 1 to 2, **characterised in that** 30-90% of the pulp flow between two cells (4, 5, 6) is fed by the pump (13) to the injector (8, 9) and that 70-10% of the pulp flow is drawn into the injector (8, 9) by suction without pumping.

## Revendications

1. Méthode d'aération pour dispersions, notamment pour la flottation, par exemple pendant le désencrage de suspensions de pâtes fibreuses, où au moins une cellule (4, 5, 6) et au moins un injecteur auto-aspirant (7, 7', 8, 9) sont prévus, un premier courant partiel (14, 14') de la dispersion étant amené à l'injecteur (7, 7', 8, 9) moyennant une pompe (13) et aéré, et un deuxième courant partiel (15, 15') de la dispersion étant aspiré par l'injecteur (7, 7', 8, 9) sans pompage, **caractérisée en ce que** le deuxième courant partiel (15) est aspiré par l'injecteur (8, 9) à partir d'une cellule précédente (4, 5).

2. Méthode selon la revendication 1, **caractérisée en ce que** le premier courant partiel (14) est repris à partir d'une cellule (4, 5) à l'aide de la pompe (13) et amené à l'injecteur (8, 9) d'une cellule suivante (5, 6).

3. Méthode selon l'une des revendications 1 à 2, **caractérisée en ce que** 30 à 90 % du courant de pâte sont amenés à l'injecteur (8, 9), situé entre deux cellules (4, 5, 6), moyennant la pompe (13) et que 70 à 10% du courant de pâte sont aspirés par l'injecteur (8, 9) sans pompage.
